# EUROPEAN PATENT APPLICATION

(11) **EP 4 664 875 A1**
(43) Date of publication of application: **17.12.2025**
(21) Application number: 24753090.0
(22) Date of filing: 19.01.2024
(51) Int. Cl.: H04N 7/18, G05D 1/00, H04N 23/60

(54) **MEASUREMENT METHOD, PROGRAM, AND MEASUREMENT SYSTEM**

(30) Priority: 08.02.2023 JP 2023017416
(71) Applicant: Panasonic Intellectual Property Management Co., Ltd., Kadoma-shi, Osaka 571-0057 (JP)
(72) Inventor: MURAMOTO, Eiichi, Kadoma-shi, Osaka 571-0057 (JP); SATO, Masaki, Kadoma-shi, Osaka 571-0057 (JP)
(74) Representative: Novagraaf International SA
(86) International application number: PCT/JP2024/001455
(87) International publication number: WO 2024/166644

(57) **Abstract**

A measurement method according to one aspect of the present disclosure is executed by a computer, and includes: a first display process (S10) of repeatedly displaying, on a first display device, a first image including a plurality of items of time information each indicating a time, while sequentially updating the plurality of items of time information one by one; a first image capturing process (S20) of generating a second image by causing a first image capturing device to capture the first image displayed on the first display device; a second display process (S30) of displaying the second image on a second display device; and a measurement process (S40) of measuring, based on the first image and the second image, a delay time from when the first image capturing device captures the first image to when the second image is displayed on the second display device.

## Description

### [Technical Field]

The present disclosure relates to a measurement method, a program, and a measurement system.

### [Background Art]

In recent years, systems for remotely operating robots such as vehicles have been developed. In this type of system, images obtained from an image capturing device provided on the robot are displayed on a display device used by an operator who remotely operates the robot. The operator remotely operates the robot while checking the images displayed on the display device. Here, the images are displayed on the display device slightly delayed from the timing when they were captured by the image capturing device, that is, the timing when the images were generated by image capturing by the image capturing device. Stated differently, a delay time (also called glass-to-glass latency) occurs, which is the time from when the image capturing device captures an image to when the generated image is displayed on the display device.

For example, Patent Literature (PTL) 1 discloses a system for remotely operating an industrial vehicle in accordance with the delay time.

### [Citation List]

### [Patent Literature]

[PTL 1] Japanese Unexamined Patent Application Publication No. 2019-83462

### [Summary of Invention]

### [Technical Problem]

The present disclosure provides a measurement method and the like that can inhibit an inability to measure delay time.

### [Solution to Problem]

A measurement method according to one aspect of the present disclosure is a method executed by a computer, and includes: a first display process of repeatedly displaying, on a first display device, a first image including a plurality of items of time information each indicating a time, while sequentially updating the plurality of items of time information one by one; a first image capturing process of generating a second image by causing a first image capturing device to capture the first image displayed on the first display device; a second display process of displaying the second image on a second display device; and a measurement process of measuring, based on the first image and the second image, a delay time from when the first image capturing device captures the first image to when the second image is displayed on the second display device.

A program according to one aspect of the present disclosure is a program for causing a computer to execute the measurement method described above.

A measurement system according to one aspect of the present disclosure includes: a first display controller that repeatedly displays, on a first display device, a first image including a plurality of items of time information each indicating a time, while sequentially updating the plurality of items of time information one by one; an image capturing controller that generates a second image by causing a first image capturing device to capture the first image displayed on the first display device; a second display controller that displays the second image on a second display device; and a measurer that measures, based on the first image and the second image, a delay time from when the first image capturing device captures the first image to when the second image is displayed on the second display device.

### [Advantageous Effects of Invention]

The present disclosure can provide a measurement method and the like that can inhibit an inability to measure delay time.

### [Brief Description of Drawings]

[FIG. 1]

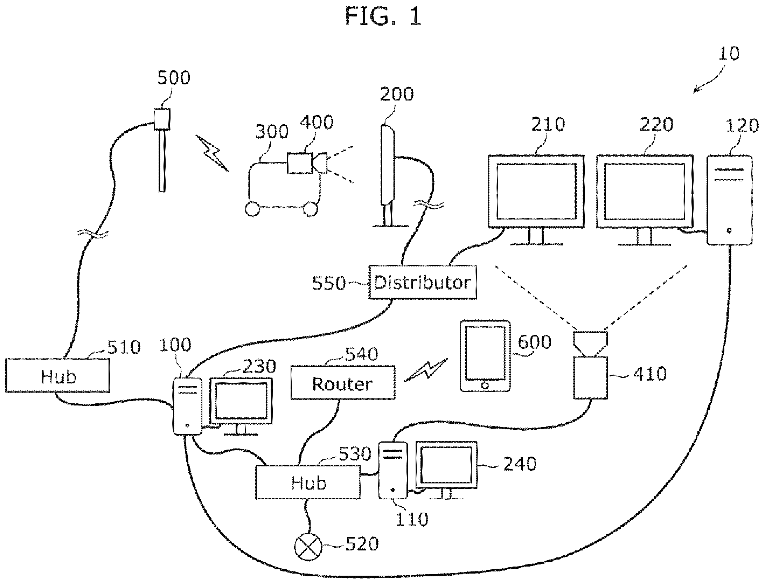

   FIG. 1 is a diagram for explaining an overview of a delay measurement system according to an embodiment of the present disclosure.
[FIG. 2]

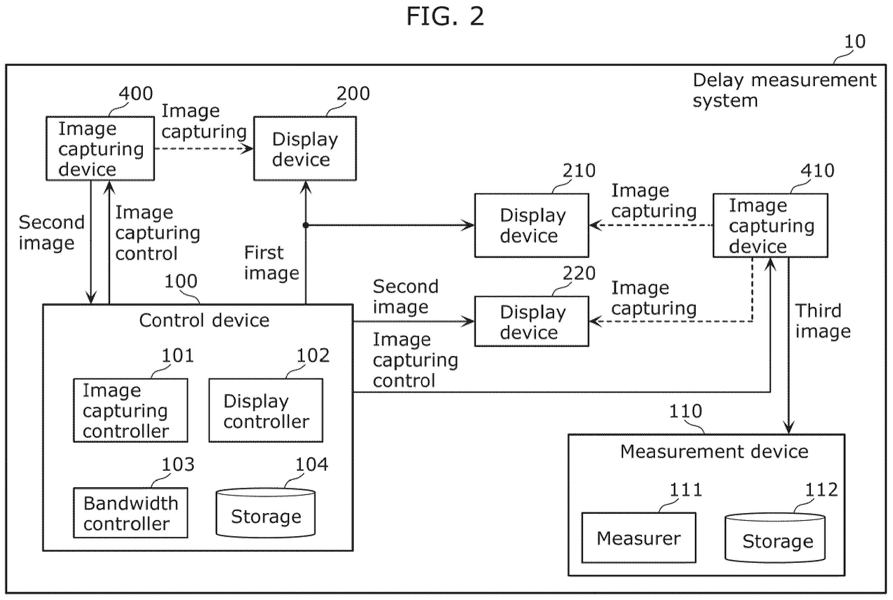

   FIG. 2 is a block diagram illustrating a characteristic functional configuration of a delay measurement system according to an embodiment of the present disclosure.
[FIG. 3]

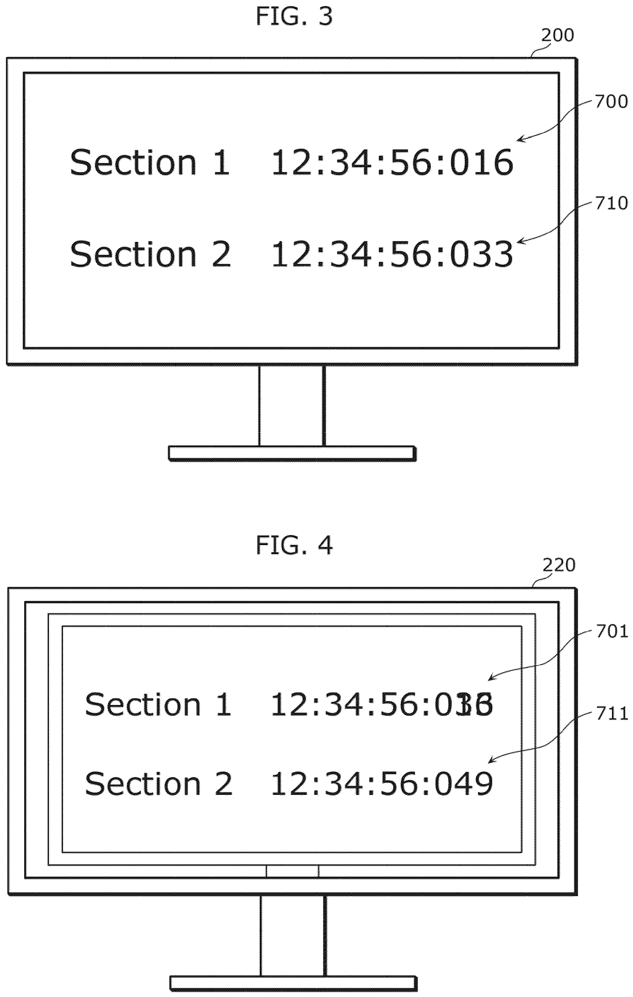

   FIG. 3 illustrates a specific example of an image displayed on a display device according to an embodiment of the present disclosure.
[FIG. 4]
   FIG. 4 illustrates a specific example of an image displayed on a display device according to an embodiment of the present disclosure.
[FIG. 5]

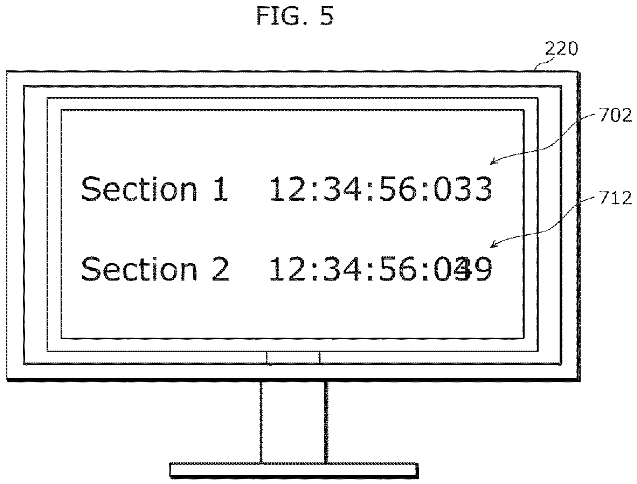

   FIG. 5 illustrates a specific example of an image displayed on a display device according to an embodiment of the present disclosure.
[FIG. 6]

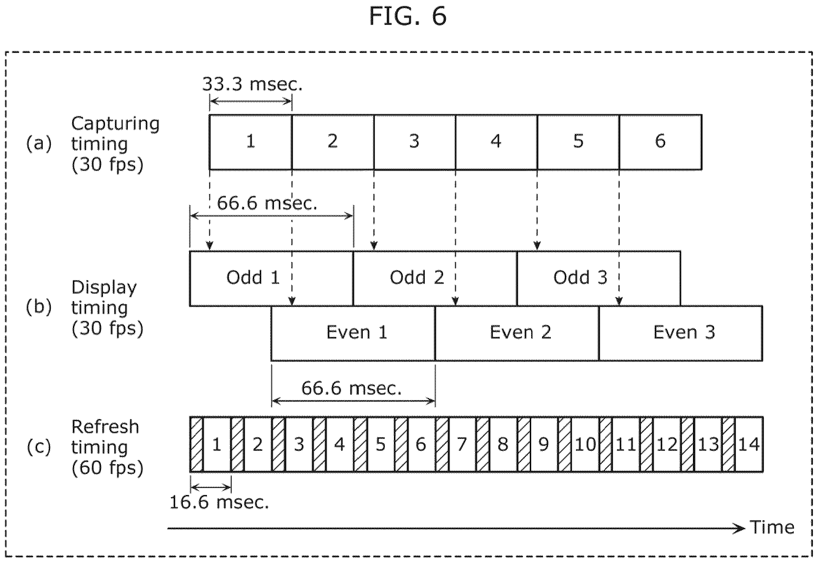

   FIG. 6 is a diagram for explaining capturing timing and display timing according to an embodiment of the present disclosure.
[FIG. 7]

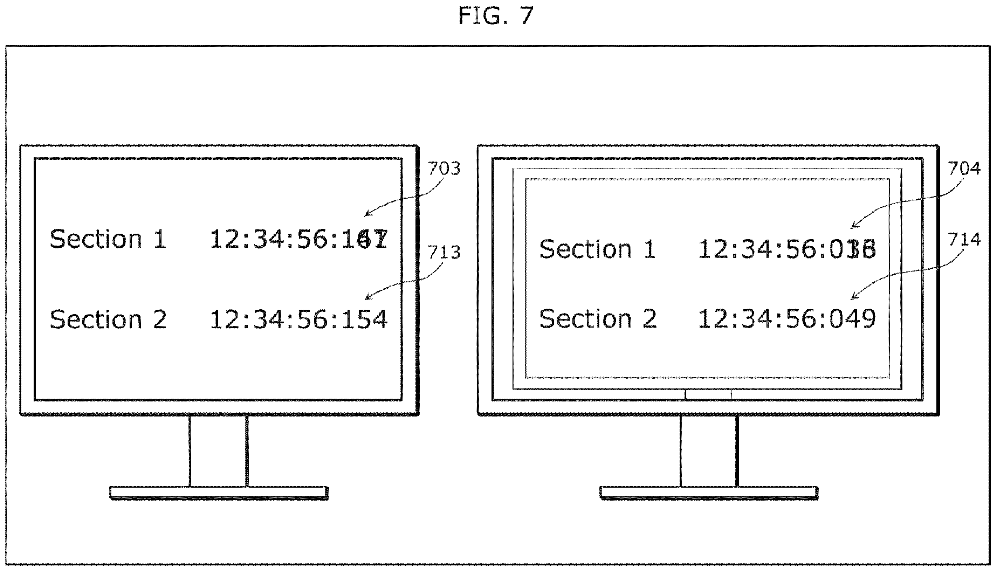

   FIG. 7 illustrates a specific example of an image displayed on a display device according to an embodiment of the present disclosure.
[FIG. 8]

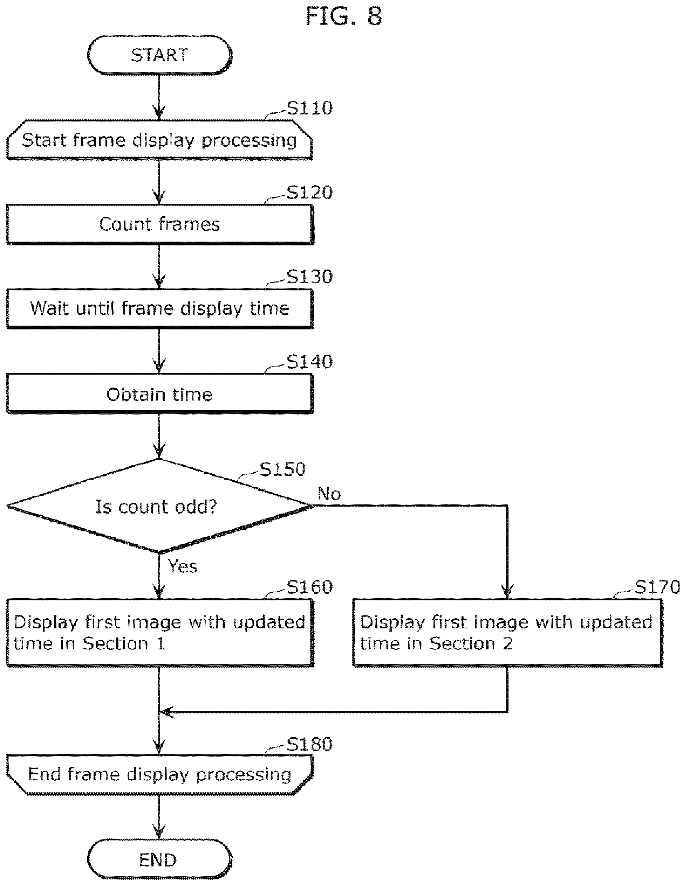

   FIG. 8 is a flowchart for explaining frame display processing executed by a control device according to an embodiment of the present disclosure.
[FIG. 9]

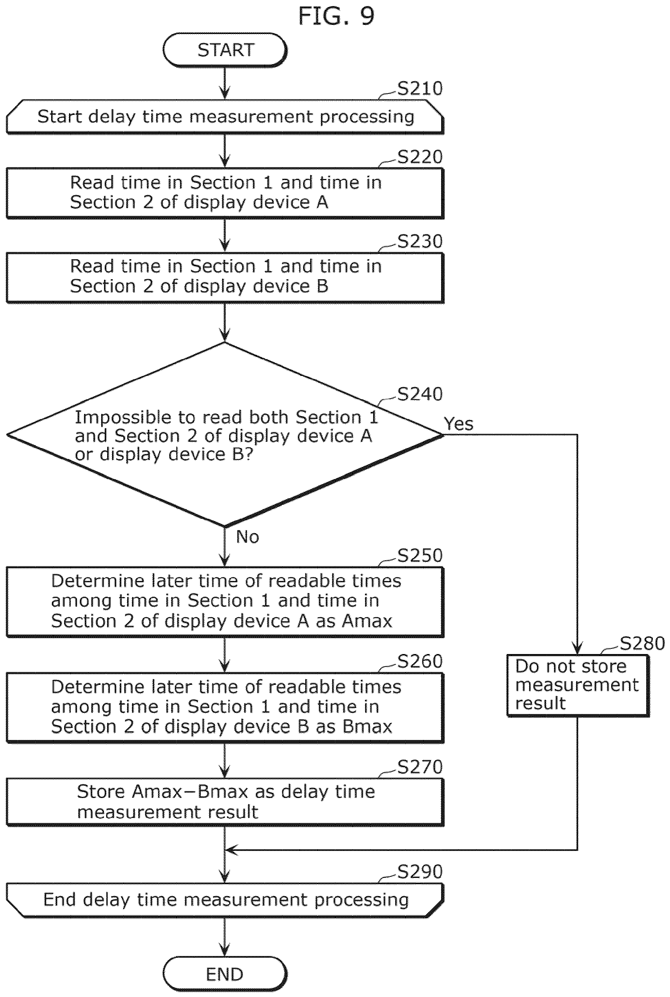

   FIG. 9 is a flowchart for explaining delay time measurement processing executed by a measurement device according to an embodiment of the present disclosure.
[FIG. 10]

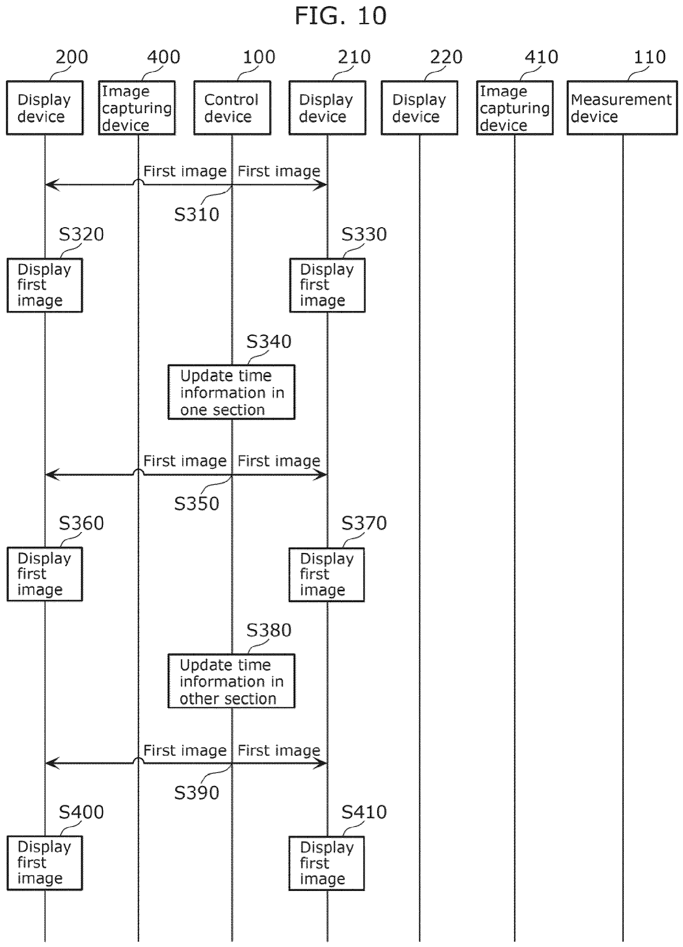

   FIG. 10 is a sequence diagram illustrating a processing procedure of a delay measurement system according to an embodiment of the present disclosure.
[FIG. 11]

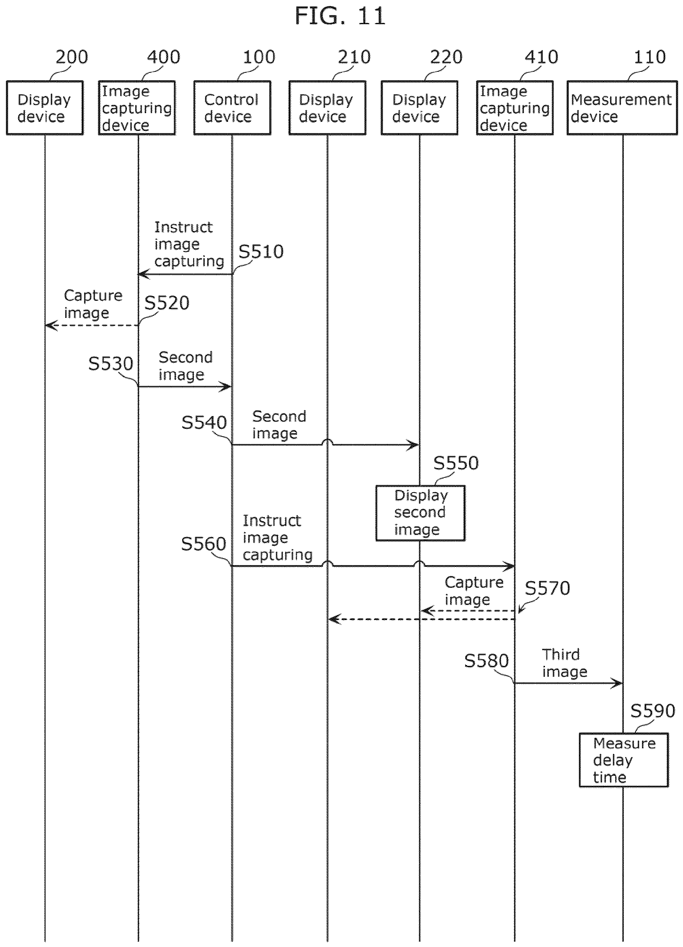

   FIG. 11 is a sequence diagram illustrating a processing procedure of a delay measurement system according to an embodiment of the present disclosure.
[FIG. 12]

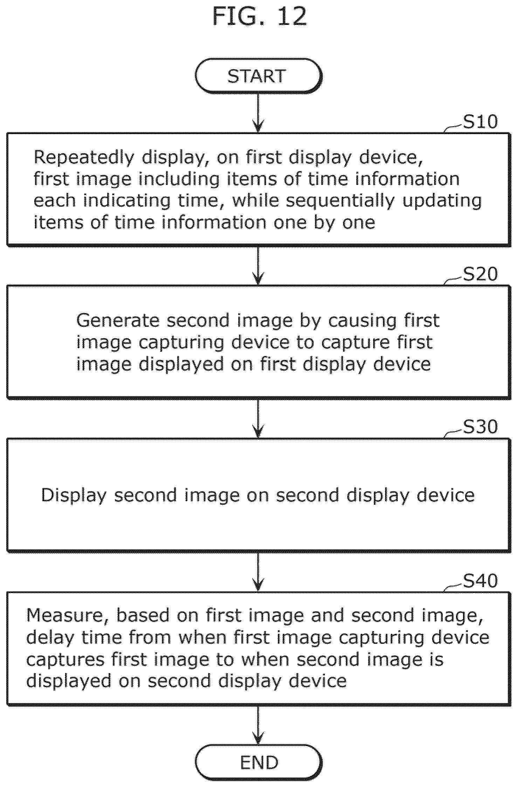

   FIG. 12 is a flowchart illustrating a processing procedure of a measurement system according to an embodiment of the present disclosure.

### [Description of Embodiments]

### UNDERLYING KNOWLEDGE FORMING BASIS OF THE PRESENT DISCLOSURE

As described above, in recent years, systems for remotely operating robots such as vehicles have been developed. These types of systems enable, for example, services for delivering goods from stores to homes using autonomous mobile robots that are remotely monitored by a single operator. For example, when a regularly scheduled bus is remotely operated, monitoring and control of buses is performed by a single operator from a remote location. This makes it possible to reduce manpower and cost.

In these types of systems, images obtained from an image capturing device provided on a robot are displayed on a display device used by an operator who remotely operates the robot. Delay time is exemplified as an index for evaluating the performance of such systems.

For example, as in actual operation of the system, the time from when an image is generated by causing the image capturing device to capture an object until the image is displayed on the display device used by the operator is measured as the delay time. The object is, for example, an image including the current time displayed on an arbitrary display device. As a result, the delay time can be measured from the time (current time at the time of capturing) included in the image generated by the image capturing device that is displayed on the display device used by the operator, and the time (current time at the time of image display) when the image is displayed on the display device used by the operator.

When displaying the time on the display device, the time included in the image (for example, the current time) is updated when the image is changed (that is, for each displayed frame). Here, when the image is captured by the image capturing device at the timing when the image is switched, there are cases where, in the image generated by the image capturing device, it appears as if images before and after the change are overlapped. In such an image, there is a problem where the time included in the image generated by the image capturing device cannot be accurately read, and the delay time cannot be measured.

In view of these problems, the inventors of the present application have arrived at creating the present disclosure.

Hereinafter, one or more embodiments will be described with reference to the drawings. Each embodiment described below illustrates a general or specific example. The numerical values, shapes, materials, elements, the arrangement and connection of the elements, steps, order of the steps, etc., shown in the following one or more embodiments are mere examples, and therefore do not limit the scope of the present disclosure. Accordingly, among the elements in the following one or more embodiments, those not recited in any of the independent claims are described as optional elements.

Note that the drawings are represented schematically and are not necessarily precise illustrations. Accordingly, the figures are not necessarily to scale. In the figures, the same reference signs are used for elements that are essentially the same, and duplicate description may be omitted or simplified.

In the following description, terms such as "or more" and "less than" may be used, but they are not used in a strictly literal sense. For example, when "or more" is written, it may mean "greater than". For example, when "less than" is written, it may mean "or less". When written in contrast such as "greater than or equal to a predetermined value" and "less than a predetermined value", it means that they are distinguished by the predetermined value as a boundary, and may mean "greater than the predetermined value" and "less than or equal to the predetermined value", respectively.

### EMBODIMENT

### Configuration

First, the configuration of delay measurement system 10 will be described.

FIG. 1 is a diagram for explaining an overview of delay measurement system 10 according to the embodiment.

Delay measurement system 10 is a system that, when an operator is remotely operating robot 300, measures the delay time from when image capturing device 400 provided on robot 300 captures an image of an arbitrary position until the image obtained by image capturing device 400 capturing the arbitrary position is displayed on the display device (for example, display device 220) used by the operator, in other words, the glass-to-glass latency.

For example, the operator operates control devices such as a handle and brakes (not illustrated in the drawings) connected to remote operation device 120 while checking the images displayed on display device 220. Remote operation device 120 transmits information related to operations made via the control devices to robot 300. As a result, robot 300 moves based on the operator's operations.

In delay measurement system 10, to measure the delay time, image capturing device 400 captures the image displayed on display device 200.

Delay measurement system 10 includes control device 100, measurement device 110, remote operation device 120, display device 200, display device 210, display device 220, display device 230, display device 240, robot 300, image capturing device 400, image capturing device 410, base station 500, hub 510, hub 530, router 540, distributor 550, and terminal 600.

Control device 100 is communicably connected to display device 200, display device 210, display device 220, display device 230, display device 240, image capturing device 400, and image capturing device 410, and is a computer that controls these.

Measurement device 110 is communicably connected to image capturing device 410 and is a computer that obtains, from image capturing device 410, an image (also referred to as a third image) generated by image capturing device 410.

Remote operation device 120 is communicably connected to robot 300 and is a computer for the operator to remotely operate robot 300.

Each of these computers includes, for example, a communication interface for communicating with each device, non-volatile memory in which programs are stored, volatile memory that serves as a temporary storage area for executing programs, input/output ports for transmitting and receiving signals, and a processor for executing programs. Any one of these computers may be implemented by what is commonly known as a microcomputer.

Display device 200, display device 210, display device 220, display device 230, and display device 240 are each displays for displaying images. Display device 200, display device 210, display device 220, display device 230, and display device 240 are each communicably connected, for example, to a computer such as control device 100, measurement device 110, or remote operation device 120 via a High-Definition Multimedia Interface (HDMI) (registered trademark) cable or the like.

Robot 300 is a machine remotely operated by the operator. Robot 300 is, for example, a vehicle, but may be any machine.

Image capturing device 400 and image capturing device 410 are cameras that generate images by capturing a subject. Image capturing device 400 is communicably connected to control device 100 via, for example, robot 300, base station 500, and hub 510. Image capturing device 410 is communicably connected to control device 100 and measurement device 110 via, for example, a communication line such as an HDMI cable.

Base station 500 is a base station that wirelessly communicates with robot 300 and communicates with control device 100 via hub 510.

Hub 510 is a repeater that connects base station 500 and control device 100.

Hub 530 is a repeater that connects control device 100, measurement device 110, and router 540. Hub 530 is communicably connected to, for example, a server device (not illustrated in the drawings) via internet 520.

Router 540 is a repeater that connects hub 530 and terminal 600.

Distributor 550 is a device that is connected to control device 100, display device 200, and display device 210 via a communication line such as an HDMI cable, and transmits a first image output from control device 100 to display device 200 and display device 210.

Terminal 600 is a computer that receives operations from the user. Information indicating operations received from the user at terminal 600 is transmitted to control device 100 and/or measurement device 110 via router 540 and hub 530. In the present embodiment, terminal 600 is a tablet terminal, but may be implemented by any device such as a personal computer or smartphone.

One example of the communication standard used in the above communication is, for example, Ethernet (registered trademark), but any communication standard may be used.

For example, the user operates terminal 600, such as a tablet terminal, to transmit an instruction to start measurement of delay time to control device 100 and measurement device 110 via router 540 and hub 530. For example, when the instruction has been obtained, Control device 100 and measurement device 110 start processing for measurement of delay time.

For example, when the instruction has been obtained, control device 100 causes display device 200 and display device 210 to display the same image (also referred to as a first image) via distributor 550 connected by a communication line such as an HDMI cable. Display device 200 and display device 210 are, for example, controlled in synchronization, and the same first image is displayed on display device 200 and display device 210 at the same timing. For example, display device 200 is placed at a location where robot 300 is positioned, and display device 210 is placed at a location where remote operation device 120 is positioned. The first image displayed on display device 200 and display device 210 includes, for example, information indicating the current time. The information indicating the current time included in the first image displayed on display device 200 and display device 210 is updated each time the first image displayed on display device 200 and display device 210 changes. Stated differently, the current time is displayed on display device 200 and display device 210 while being repeatedly updated.

Control device 100 causes image capturing device 400 provided on robot 300 to capture the first image displayed on display device 200. Stated differently, control device 100 captures the screen of display device 200 on which the first image is displayed. The image generated thereby (also referred to as the second image) is obtained by robot 300, and is transmitted to control device 100 via base station 500 capable of wirelessly communicating with robot 300 and hub 510. Image capturing device 400, for example, repeatedly captures the first image displayed on display device 200, and repeatedly transmits the second image generated thereby to control device 100.

The image may be transmitted from robot 300 to control device 100 via a server device (not illustrated in the drawings) capable of communicating with base station 500 and control device 100 via internet 520 and hub 510.

Control device 100 causes display device 220 to display the obtained second image. For example, control device 100 transmits the second image to remote operation device 120, thereby causing remote operation device 120 to display the second image on display device 220. Hereinafter, the process in which control device 100 transmits the second image to remote operation device 120 and remote operation device 120 displays the second image on display device 220, is also simply referred to as control device 100 causing display device 220 to display the obtained second image. Control device 100 may directly cause display device 220 to display the obtained second image without going through remote operation device 120. Control device 100, for example, causes display device 220 to display the repeatedly obtained second image each time it obtains the second image.

Control device 100 causes image capturing device 410 to capture the first image displayed on display device 210, and the second image displayed on display device 220. The thus generated image including the first image and the second image (third image) is obtained by measurement device 110. Image capturing device 410, for example, repeatedly captures the first image displayed on display device 210 and the second image displayed on display device 220, and repeatedly transmits the third image generated thereby to measurement device 110.

Measurement device 110 measures the delay time based on the obtained third image. For example, measurement device 110 performs measurement of delay time each time the third image is obtained.

For example, a third image including the first image and a third image including the second image may be generated by two synchronized image capturing devices separately capturing the first image displayed on display device 210 and the second image displayed on display device 220, respectively.

For example, if image capturing device 400 and image capturing device 410 are in an environment where they can capture images included in the same display device 200, display device 200 and display device 210 may be implemented as a single device.

FIG. 2 is a block diagram illustrating a characteristic functional configuration of delay measurement system 10 according to the embodiment. In FIG. 2, illustration of some elements included in delay measurement system 10, such as robot 300 and remote operation device 120, is omitted.

Control device 100 includes image capturing controller 101, display controller 102, bandwidth controller 103, and storage 104.

Image capturing controller 101 is a processing unit that controls the image capturing of image capturing device 400 and image capturing device 410. For example, image capturing controller 101 controls image capturing device 400 to generate a second image by capturing the first image displayed on display device 200 with image capturing device 400. For example, image capturing controller 101 controls image capturing device 410 to generate a third image by capturing the second image displayed on display device 220 and the first image displayed on display device 210.

The capturing timing and capturing conditions such as exposure time of image capturing device 400 and image capturing device 410 may be arbitrarily determined. In the present embodiment, image capturing device 400 and image capturing device 410 each perform image capturing at 60 frames per second (fps), that is, approximately every 16.6 msec.

Display controller 102 is a processing unit that controls the display of images on display device 200, display device 210, and display device 220. Display controller 102 is an example of the first display controller and the second display controller. For example, display controller 102 repeatedly displays, on display device 200, a first image including a plurality of items of time information each indicating a time, while sequentially updating the plurality of items of time information one by one. More specifically, display controller 102 repeatedly displays the first image on display device 200 while sequentially updating a time indicated by any one of the plurality of items of time information.

Time information is information that indicates time. For example, the first image displays time information with numbers that indicate time.

FIG. 3 illustrates a specific example of an image (first image) displayed on display device 200 according to the embodiment. Note that the same image as the first image illustrated in FIG. 3, for example, is also displayed on display device 210. For example, display controller 102 repeatedly displays, on display device 210, the first image while sequentially updating a time indicated by any one of the plurality of items of time information.

As illustrated in FIG. 3, for example, the first image displayed on display device 200 includes time information 700 in "Section 1" and time information 710 in "Section 2".

Time information 700 indicates, as in "12:34:56:016", that the current time at the timing when time information 700 is updated is 12 hours, 34 minutes, 56 seconds, and 016 milliseconds.

Time information 710 indicates, as in "12:34:56:033", that the current time at the timing when time information 710 is updated is 12 hours, 34 minutes, 56 seconds, and 033 milliseconds.

Time information 700 and time information 710 are, for example, alternately updated one at a time each time the first image is repeatedly displayed on display device 200. Therefore, of time information 700 and time information 710, one indicates the most recent current time in the first image, while the other indicates the most recent current time when the previous version of the first image was displayed.

For example, display controller 102 calculates a count of the number of times the first image is displayed on display device 200 with an updated time indicated by any one of the plurality of items of time information. Here, for example, the plurality of items of time information include first time information and second time information, like time information 700 and time information 710. Stated differently, for example, the plurality of items of time information may be two items of time information. Here, for example, when the count is an even number, display controller 102 only updates one of the first time information or the second time information on the first image to be displayed on display device 200, and when the count is an odd number, display controller 102 only updates the other of the first time information or the second time information on the first image to be displayed on display device 200.

For example, time information 700 displayed in "Section 1" is updated in the first image displayed on display device 200 when the count is an odd number (also simply called an odd-numbered frame). Accordingly, time information 710 displayed in "Section 2" is not updated in the odd-numbered frame.

In contrast, for example, time information 710 displayed in "Section 2" is updated in the first image displayed on display device 200 when the count is an even number (also simply called an even-numbered frame). Accordingly, time information 700 displayed in "Section 1" is not updated in the even-numbered frame.

For example, display controller 102 causes display device 220 to display the second image.

FIG. 4 and FIG. 5 illustrate specific examples of images (second images) displayed on display device 220 according to the embodiment. More specifically, FIG. 4 is a specific example of the second image when the odd-numbered frame displayed on display device 200 is captured, and FIG. 5 is a specific example of the second image when the even-numbered frame displayed on display device 200 is captured.

As illustrated in FIG. 4, if the timing at which the first image displayed on display device 200 is captured by image capturing device 400 is poor, the second image that is generated appears as if first images before and after updating are overlapped. For example, as illustrated in FIG. 4, time information 701 displayed in "Section 1" is included in the second image with overlapping numbers indicated by the two items of time information corresponding to the two first images before and after updating. Similarly, for example, if the timing of capturing is poor, as illustrated in FIG. 5, time information 712 displayed in "Section 2" is included in the second image with overlapping numbers indicated by the two items of time information corresponding to the two first images before and after updating. With time information 701 and time information 712 like these, the time information cannot be read accurately. However, for example, like time information 711 displayed in "Section 2" in FIG. 4, even if the numbers indicated by the two items of time information corresponding to the two first images before and after updating overlap, if they are the same numbers, that is, the same time information, correct time information can be included in the second image. Similarly, for example, like time information 702 displayed in "Section 1" in FIG. 5, even if the numbers indicated by the two items of time information corresponding to the two first images before and after updating overlap, if they are the same numbers, that is, the same time information, correct time information can be included in the second image.

FIG. 6 is a diagram for explaining capturing timing and display timing according to the embodiment. More specifically, (a) in FIG. 6 illustrates the timing at which image capturing device 400 captures the first image, (b) in FIG. 6 illustrates the timing at which the time indicated by the time information in the first image is updated, and (c) in FIG. 6 illustrates the timing at which the first image displayed on display device 200 is refreshed. As described above, image capturing device 400 captures images at, for example, 60 fps, but since two captured frames are reduced to one frame, in (a) in FIG. 6, the capturing timing is described as 30 fps, meaning that the measurement accuracy drops to the equivalent of 30 fps. In FIG. 6 in (b), "Odd 1" and "Odd 2", etc., indicates the timing at which the time indicated by the time information displayed in "Section 1" illustrated in FIG. 3, etc., is updated. In FIG. 6 in (b), "Even 1" and "Even 2", etc., indicates the timing at which the time indicated by the time information displayed in "Section 2" illustrated in FIG. 3, etc., is updated. For example, the time indicated by the time information displayed in "Section 1" is updated at the timing when "Odd 1" changes to "Odd 2". In FIG. 6 in (c), refreshing is performed at the timing indicated by hatching.

In this example, the time indicated by the time information in the first image is updated at 30 fps. Stated differently, in this example, the time indicated by the time information in the first image is updated once approximately every 33.3 milliseconds. In this example, the refresh rate of display device 200 is 60 Hz. Accordingly, in this example, the first image is refreshed approximately every 16.6 milliseconds. The time indicated by the time information in the first image is updated once every time the refresh is performed twice.

Note that the timing at which the time indicated by the time information in the first image is updated and the timing at which the first image is refreshed may be arbitrary.

As illustrated in FIG. 6, for example, even if the refresh timing and the capturing timing overlap, since at least one of the plurality of items of time information continues to be displayed, it is possible to reduce the occurrence of measurement errors by measurement device 110, which will be described later, due to misreading of time information caused by, for example, numbers being displayed overlapping each other.

In this way, display controller 102 repeatedly displays, on display device 200, a first image including a plurality of items of time information each indicating a time, while sequentially updating a time indicated by any one of the plurality of items of time information, that is, the first image includes time information that is not updated when the first image is changed (updated). With this, the plurality of items of time information included in the second image generated by capturing the first image can include readable time information.

Note that control device 100 may include a clock such as a real time clock (RTC) to obtain the time indicated by the time information. The time may be obtained from, for example, a server device (not illustrated in the drawings).

Although the number of items of time information included in the first image is two in the examples illustrated in FIG. 3 through FIG. 5, the number of items of time information included in the first image may be three or more, for example.

Image capturing device 400 or robot 300 may generate compressed information that is smaller in data amount than the second image and indicates the times indicated by each of the plurality of items of time information included in the second image, and may transmit the compressed information to control device 100. Image capturing controller 101, for example, causes image capturing device 400 or robot 300 to generate compressed information that is smaller in data amount than the second image and indicates the times indicated by each of the plurality of items of time information included in the second image, based on the transmission rate during the period until the second image is transmitted from image capturing device 400 to display device 210 (for example, the transmission rate between image capturing device 400 and control device 100), and causes the generated compressed information to be transmitted. Display controller 102, for example, transmits the compressed information to remote operation device 120, thereby causing remote operation device 120 to reconstruct the second image based on the compressed information and display it on display device 220. Display controller 102 may cause the second image to be reconstructed based on the compressed information and displayed on display device 220. In this way, the second image may be encoded and transmitted, and decoded when displayed on display device 220. For example, when the transmission rate is greater than or equal to a predetermined transmission rate, the second image is transmitted without being encoded, and when the transmission rate is less than the predetermined transmission rate, the second image is encoded and transmitted. The predetermined transmission rate may be arbitrarily defined and is not particularly limited.

The plurality of items of time information may each be a number or may be something other than a number. For example, the plurality of items of time information may each be a QR code (registered trademark) that indicates time. The plurality of items of time information may each be a barcode indicating time or may be any symbol. The plurality of items of time information may each be expressed as a sequential number or symbol or the like associated with time, rather than a number indicating a specific time.

For example, display controller 102 changes the size, in the first image, of the plurality of items of time information included in the first image to be displayed on display device 200, based on the transmission rate during the period until the second image is transmitted from image capturing device 400 to display device 220. Display controller 102, for example, changes the display mode of the time information in the first image such that the lower the transmission rate is, the larger the time information is displayed.

For example, display controller 102 may transmit, as the first image, an image cropped from a region where time information is displayed, based on the transmission rate during the period until the second image is transmitted from image capturing device 400 to display device 220. Display controller 102 may transmit a compressed first image based on the transmission rate during the period until the second image is transmitted from image capturing device 400 to display device 220. For example, display controller 102 may compress and transmit an image cropped from a region where time information is displayed, based on the transmission rate during the period until the second image is transmitted from image capturing device 400 to display device 220. For example, display controller 102 performs the above-described cropping and/or compression processing when the transmission rate during the period until the second image is transmitted from image capturing device 400 to display device 220 is lower than a predetermined transmission rate. As a result, even when the transmission rate during the period until the second image is transmitted from image capturing device 400 to display device 220 is low, the image is less likely to be distorted when the time information in the first image is displayed on display device 200.

Bandwidth controller 103 is a processing unit that controls the transmission rate during the period until the second image is transmitted from image capturing device 400 to display device 220. For example, delay measurement system 10 calculates delay time with respect to transmission rate by performing measurement of delay time while changing the transmission rate.

Image capturing controller 101, display controller 102, and bandwidth controller 103 are each processing units that are realized by, for example, a processor that executes a control program stored in storage 104.

Storage 104 is a storage device that stores control programs executed by each processing unit, various conditions, and thresholds. Storage 104 is realized by, for example, semiconductor memory or a hard disk drive (HDD).

Measurement device 110 includes measurer 111 and storage 112.

Measurer 111 is a processing unit that measures the delay time. More specifically, measurer 111 measures, based on the first image and the second image, a delay time from when image capturing device 400 captures the first image to when the second image is displayed on display device 220. More specifically, measurer 111 measures the delay time based on a third image including the first image and the second image. For example, image capturing device 410 transmits a third image generated by capturing the first image displayed on display device 210 and the second image displayed on display device 220 to measurement device 110. Measurer 111 measures the delay time based on the third image obtained from image capturing device 410.

FIG. 7 illustrates a specific example of an image (third image) according to the embodiment. More specifically, FIG. 7 illustrates specific examples of time information 703 and time information 713 included in the first image displayed on display device 210 captured by image capturing device 410, and time information 704 and time information 714 included in the second image displayed on display device 220.

When the third image illustrated in FIG. 7 is obtained, for example, measurer 111 measures the delay time by calculating the difference between the time indicated by readable time information 713 and the time indicated by readable time information 714. In this example, the delay time is 0.105 seconds.

For example, when the plurality of items of time information are all readable, the latest time among the times indicated by the plurality of items of time information is used for measuring the delay time. Therefore, for example, measurer 111 measures the delay time based on the difference between the latest time indicated by readable time information among the plurality of items of time information included in the second image displayed on display device 220 and the latest time indicated by readable time information among the plurality of items of time information included in the first image displayed on display device 210.

Measurer 111 is realized by, for example, a processor that executes a control program stored in storage 112.

Storage 112 is a storage device that stores control programs executed by measurer 111, various conditions, and thresholds. Storage 112 is realized by, for example, semiconductor memory or an HDD.

### Processing Procedure

Next, the processing procedure of delay measurement system 10 will be described.

FIG. 8 is a flowchart for explaining frame display processing executed by control device 100 according to the embodiment. More specifically, FIG. 8 is a flowchart illustrating a processing procedure in which display controller 102 causes display device 200 to display a first image.

Display controller 102 starts frame display processing in which steps S120 to S170 are repeatedly executed (S110). The number of repetitions of this processing may be arbitrarily defined and is not particularly limited.

Display controller 102 counts the number of frames (S120). Step S120 may be executed at any timing as long as whether the count is even or odd is appropriately determined at the timing when the first image is next updated.

Display controller 102 waits until a frame display time, which is a timing for updating time information in the first image, is reached (S130). If the first image is already being displayed on display device 200, display controller 102 continues to cause the first image that is already being displayed to be displayed on display device 200. The frame display time may be arbitrarily defined and is not particularly limited.

At the moment the frame display time is reached, display controller 102 obtains that time (S140). Note that display controller 102 may shift by a certain offset time in consideration of the refresh timing of the display (for example, display device 200). For example, in the case of a display that refreshes at 16.6 ms intervals, only the first time may be offset by 8.4 ms, which is a value between those intervals. Stated differently, the display may, rather than waiting to display the next time after 16.6 ms has elapsed from a specific time, wait so that only the first time becomes 16.6 ms + 8.4 ms, and then wait for 16.6 ms for subsequent times.

Display controller 102 determines whether the count is odd or not (S150).

When the count is determined to be odd (Yes in S150), display controller 102 updates the first image so that the time indicated by the time information in "Section 1" shown in, for example, FIG. 3, becomes the time obtained in step S130 (S160).

However, when the count is determined not to be odd (that is, to be even) (No in S150), display controller 102 updates the first image so that the time indicated by the time information in "Section 2" shown in, for example, FIG. 3, becomes the time obtained in step S130 (S170).

Display controller 102 repeatedly executes steps S120 to S170 a predetermined number of times and ends the frame display processing (S180).

FIG. 9 is a flowchart for explaining delay time measurement processing executed by measurement device 110 according to the embodiment. More specifically, FIG. 9 is a flowchart illustrating a processing procedure, performed by measurer 111, from obtaining the third image to measuring the delay time. Display device A is, for example, one of display device 210 or display device 220, and display device B is, for example, the other of display device 210 or display device 220.

Measurer 111 starts delay time measurement processing in which steps S220 to S280 are repeatedly executed (S210). The number of repetitions of this processing may be arbitrarily defined and is not particularly limited. For example, measurer 111 executes this repeated processing for a predetermined time. The predetermined time may be arbitrarily defined and is not particularly limited. Measurement device 110 may include a clock such as an RTC to measure time. For example, measurer 111 repeatedly obtains the third image from image capturing device 410 for a predetermined time, and repeatedly performs the processing of steps S220 to S280 for the obtained third image.

Measurer 111 (i) performs reading processing for reading the time indicated by the time information in "Section 1" included in the image displayed by display device A that is included in the third image, and (ii) performs reading processing for reading the time indicated by the time information in "Section 2" included in the image displayed by display device A that is included in the third image (S220).

Measurer 111 (iii) performs reading processing for reading the time indicated by the time information in "Section 1" included in the image displayed by display device B that is included in the third image, and (iv) performs reading processing for reading the time indicated by the time information in "Section 2" included in the image displayed by display device B that is included in the third image (S230).

Measurer 111 determines, based on the results of the reading processing performed in step S220 and step S230, whether time could not be read in both of the reading processing of (i) and (ii), or whether time could not be read in both of the reading processing of (iii) and (iv) (S240). Stated differently, measurer 111 determines whether there is no readable time in the time indicated by the time information included in the image displayed by display device A that is included in the third image, or whether there is no readable time in the time indicated by the time information included in the image displayed by display device B that is included in the third image.

When the result is Yes in step S240, measurer 111 does not perform any further delay time measurement processing using the third image used in this repeated processing, and also does not store the measurement result in storage 112, for example (S280).

In contrast, for example, when the result is No in step S240, that is, when there is a readable time in both the time indicated by the time information included in the image displayed by display device A that is included in the third image and the time indicated by the time information included in the image displayed by display device B that is included in the third image, measurer 111 determines the latest time indicated by readable time information among the plurality of items of time information included in the image displayed by display device A that is included in the third image as Amax (S250).

For example, measurer 111 determines the latest time indicated by readable time information among the plurality of items of time information included in the image displayed by display device B that is included in the third image as Bmax (S260).

Measurer 111 calculates Amax-Bmax as the delay time, and stores the calculated result as the delay time measurement result in storage 112, for example (S270).

Measurer 111 repeatedly executes the processing of steps S220 to S280 for a predetermined time, and ends the delay time measurement processing (S290).

FIG. 11 and FIG. 12 are sequence diagrams illustrating a processing procedure of delay measurement system 10 according to the embodiment.

First, control device 100 transmits the first image to each of display device 200 and display device 210 (S310).

As a result, display device 200 displays the first image (S320).

Similarly, display device 210 displays the first image (S330).

In this way, control device 100, in steps S310 to S330, controls display device 200 and display device 210 to display the same first image on each of display device 200 and display device 210.

Next, control device 100 updates the time information in one of the two sections included in the first image transmitted in step S310 (S340). For example, control device 100 generates a new first image by changing the time indicated by the time information in one of the two sections, which is one of the two sections included in the first image transmitted in step S310, to the current time, according to the count of images displayed on each of display device 200 and display device 210 (that is, the above-mentioned count).

Next, control device 100 transmits the new first image generated in step S340 to each of display device 200 and display device 210 (S350).

As a result, display device 200 displays the new first image generated in step S340 (S360).

Similarly, display device 210 displays the new first image generated in step S340 (S370).

In this way, control device 100, in steps S350 to S370, controls display device 200 and display device 210 to display the same new first image on each of display device 200 and display device 210.

Next, control device 100 updates the time information in the other of the two sections included in the first image transmitted in step S350 (S380). For example, control device 100 generates a new first image by changing the time indicated by the time information in the other one of the two sections, which is the other section that was not changed in step S340, to the current time, according to the count of images displayed on each of display device 200 and display device 210.

Next, control device 100 transmits the new first image generated in step S380 to each of display device 200 and display device 210 (S390).

As a result, display device 200 displays the new first image generated in step S380 (S400).

Similarly, display device 210 displays the new first image generated in step S380 (S390).

In this way, control device 100, in steps S380 to S410, controls display device 200 and display device 210 to display the same new first image on each of display device 200 and display device 210.

Thereafter, control device 100, by repeatedly executing the processing of steps S340 to S390, causes display device 200 and display device 210 to display the first image while repeatedly alternately updating the two sections included in the first image so that the time indicated in the two sections becomes the current time.

During the repeated execution of such processing, the processing illustrated in FIG. 11 is executed.

Control device 100 transmits an instruction to image capturing device 400 to capture the first image being displayed on display device 200 (S510). More specifically, control device 100 controls image capturing device 400 to capture the first image being displayed on display device 200.

As a result, image capturing device 400 generates a second image by capturing the first image being displayed on display device 200 (S520).

Next, image capturing device 400 transmits the second image generated by capturing the first image being displayed on display device 200 to control device 100 (S530).

Next, control device 100 transmits the second image to display device 220 (S540).

As a result, display device 200 displays the second image (S550).

Thereafter, control device 100, by repeatedly executing the processing of steps S510 to S540, causes image capturing device 400 to repeatedly generate the second image by repeatedly capturing the first image displayed on display device 200, and repeatedly causes the second image to be displayed on display device 220.

As a result, the time indicated in one of the two sections of the first image included in the second image that display device 220 is displaying will be repeatedly updated.

During the repeated execution of such processing, the processing of step S560 and subsequent steps is executed.

Control device 100 transmits an instruction to image capturing device 410 to simultaneously capture both the first image being displayed on display device 210 and the second image being displayed on display device 220 (S560). More specifically, control device 100 controls image capturing device 410 to simultaneously capture the first image being displayed on display device 210, and the second image being displayed on display device 220. For example, display device 210 and display device 220 are arranged in advance to be included in the viewing angle of image capturing device 410 so that image capturing device 410 can simultaneously capture both the first image being displayed on display device 210 and the second image being displayed on display device 220.

As a result, image capturing device 410 generates a third image by capturing the first image being displayed on display device 210 and the second image being displayed on display device 220 (S570). Accordingly, a third image such as illustrated in FIG. 7 can be generated.

Next, image capturing device 410 transmits the generated third image to measurement device 110 (S580).

Next, measurement device 110 measures the delay time based on the third image (S590).

For example, measurement device 110 notifies the user of the measured delay time by displaying the measured delay time on a display device (not illustrated in the drawings) or the like.

FIG. 12 is a flowchart illustrating a processing procedure of the measurement system according to the embodiment. The measurement system is realized by at least some of the elements included in delay measurement system 10. For example, the measurement system includes image capturing controller 101 included in control device 100, display controller 102 included in control device 100, and measurer 111 included in measurement device 110.

First, the first display controller repeatedly displays, on the first display device, a first image including a plurality of items of time information each indicating a time, while sequentially updating the plurality of items of time information one by one (S10). The first display controller is, for example, display controller 102. The first display device is, for example, display device 200.

Next, image capturing controller 101 generates a second image by causing the first image capturing device to capture the first image displayed on the first display device (S20). The first image capturing device is, for example, image capturing device 400.

Next, the second display controller causes the second display device to display the second image (S30). The second display controller is, for example, display controller 102. The first display controller and the second display controller may, for example, be implemented by the same processor, or may be implemented by separate processors.

Next, measurer 111 measures, based on the first image and the second image, a delay time from when the first image capturing device captures the first image to when the second image is displayed on the second display device (S40). The second display device is, for example, display device 220.

### Advantageous effects, etc.

Hereinafter, techniques obtained from the disclosure of the present specification will be exemplified, and advantageous effects and the like obtained from the exemplified techniques will be described.

Technique 1 is a measurement method executed by a computer, and includes: a first display process (S10) of repeatedly displaying, on a first display device, a first image including a plurality of items of time information each indicating a time, while sequentially updating a time indicated by any one of the plurality of items of time information; a first image capturing process (S20) of generating a second image by causing a first image capturing device to capture the first image displayed on the first display device; a second display process (S30) of displaying the second image on a second display device; and a measurement process (S40) of measuring, based on the first image and the second image, a delay time from when the first image capturing device captures the first image to when the second image is displayed on the second display device.

With this, even in cases where the first image is captured by the first image capturing device at the timing when the first image is changed, that is, at the timing when the time information is changed as a result of the time indicated by the time information included in the first image being updated, it is possible to inhibit the time information that is not changed at that timing from being captured in a state where the first image before the change and the first image after the change overlap, becoming unreadable. This improves the possibility of measuring the delay time by using readable time information among the plurality of items of time information included in the second image. This inhibits an inability to measure delay time.

Technique 2 is the measurement method according to Technique 1, further including: a counting process of calculating a count of a number of times the first image is displayed on the first display device with an updated time indicated by any one of the plurality of items of time information, wherein the plurality of items of time information include first time information and second time information, and in the first display process, when the count is an even number, only one of the first time information or the second time information is updated on the first image to be displayed on the first display device, and when the count is an odd number, only an other of the first time information or the second time information is updated on the first image to be displayed on the first display device.

With this, the times indicated by each of the two items of time information can be alternately updated with simple processing.

Technique 3 is the measurement method according to Technique 1 or 2, further including: a third display process of repeatedly displaying the first image on a third display device while sequentially updating a time indicated by any one of the plurality of items of time information; and a second image capturing process of generating a third image by causing a second image capturing device to capture the second image displayed on the second display device and the first image displayed on the third display device, wherein in the measurement process, the delay time is measured based on the third image.

The third display device is, for example, display device 210. The first display device and the third display device are, for example, controlled in synchronization, and the same first image is displayed at the same timing.

With this, the delay time can be measured based on the plurality of items of time information included in each of the first image and the second image that are included in the third image.

Technique 4 is the measurement method according to technique 3, wherein in the measurement process, the delay time is measured based on a difference between a latest time indicated by readable time information among the plurality of items of time information included in the second image displayed on the second display device and a latest time indicated by readable time information among the plurality of items of time information included in the first image displayed on the third display device.

With this, since the latest time among the times indicated by the plurality of items of time information is the time that was last updated, the delay time can be measured more accurately.

Technique 5 is the measurement method according to any one of Techniques 1 to 4, wherein the first image capturing process further includes generating compressed information that is smaller in data amount than the second image and indicates times indicated by each of the plurality of items of time information included in the second image, based on a transmission rate during a period until the second image is transmitted from the first image capturing device to the second display device, and in the second display process, the second image is reconstructed based on the compressed information and displayed on the second display device.

When the transmission rate decreases, a coarse image will be transmitted in order to reduce the amount of data to be transmitted. Therefore, for example, when the transmission rate is greater than or equal to a predetermined transmission rate, the second image is transmitted from the first image capturing device to the second display device, and when the transmission rate becomes less than the predetermined transmission rate, compressed information is generated by compressing the second image at the first image capturing device, and output. For example, control device 100 or remote operation device 120, which controls display device 220 that is one example of the second display device, obtains the compressed information, reconstructs the second image from the compressed information, and displays the reconstructed second image on display device 220. With this, it is possible to prevent image distortion due to a decrease in the transmission rate.

Technique 6 is the measurement method according to any one of Techniques 1 to 5, wherein each of the plurality of items of time information is a QR code (registered trademark) that indicates time.

With this, compared to a case where time information is included in an image as, for example, numbers or the like, the time indicated by the time information can be more easily obtained through simple processing such as image analysis.

Technique 7 is the measurement method according to any one of Techniques 1 to 6, wherein the first display process includes changing a size, in the first image, of the plurality of items of time information included in the first image to be displayed on the first display device, based on a transmission rate during a period until the second image is transmitted from the first image capturing device to the second display device.

As described above, when the transmission rate decreases, a coarse image will be transmitted in order to reduce the amount of data to be transmitted. Therefore, for example, by making the time information displayed larger the lower the transmission rate is, the time information can be more easily read even if the second image becomes coarse.

Technique 8 is a program for causing a computer to execute the measurement method according to any one of Techniques 1 to 7.

With this, similar effects to the measurement method according to one aspect of the present disclosure are achieved.

Technique 9 is a measurement system including: a first display controller that repeatedly displays, on a first display device, a first image including a plurality of items of time information each indicating a time, while sequentially updating the plurality of items of time information one by one; image capturing controller 101 that generates a second image by causing a first image capturing device to capture the first image displayed on the first display device; a second display controller that displays the second image on a second display device; and measurer 111 that measures, based on the first image and the second image, a delay time from when the first image capturing device captures the first image to when the second image is displayed on the second display device.

With this, similar effects to the measurement method according to one aspect of the present disclosure are achieved.

Note that the measurement system according to one aspect of the present disclosure may be implemented by a plurality of devices (for example, a plurality of computers) like control device 100 and measurement device 110 of the above embodiment, or may be implemented by a single device (for example, a computer) that realizes each function.

### OTHER EMBODIMENTS

Although the above described one exemplary embodiment, the present disclosure is not limited to the above embodiment.

For example, the method in the above embodiment is a method that displays times corresponding to two frames, an even-numbered frame and an odd-numbered frame, on a screen, but the present disclosure is not limited to this example. This method may be extended to three or more frames. For example, in the case where three frames are displayed, three frames may be displayed on the same screen, such as a display area displayed when the frame count is a multiple of 3, a display area displayed when the frame count is a multiple of 3 plus 1, and a display area displayed when the frame count is a multiple of 3 plus 2. Similarly, display areas for displaying a plurality of frames, such as four frames or five frames, may be provided.

By operating in this way, it becomes possible to accurately measure the delay time even if the camera's image capturing capability (frame rate) or the display's display capability (frame rate) improves in the future, or if the exposure time of the camera capturing two screens is extended due to shooting in dark places or the like.

In the delay measurement in the above embodiment, the evaluation video captured by image capturing device 400 provided on robot 300 is an image displaying the time of a plurality of frames, but as a glass-to-glass latency measurement method, more realistic video may be added as evaluation video. Stated differently, video with large changes that would result in a large code amount during video encoding may be added as evaluation video. Here, the delay may be measured before and after the change in code amount. The code amount of video encoding may be changed, and the delay may be measured for each changed video. The data size of the video may be changed instead of the code amount.

Control device 100 may delay the video packets from robot 300 when transmitting them to remote operation device 120. This delay may be a delay that reproduces delays observed in wireless networks or the internet.

Color codes may be used instead of encoding using QR codes.

A frame counter may be displayed by embedding the frame counter in the video in addition to the time display. Means may be provided for associating frame counters and generated code amounts with separate analysis means, and for associating frame counters and delay measurement timing. By operating in this way, it becomes possible to perform detailed delay measurement such as when delay is extended due to transmission of frames with large code amounts.

In the above embodiment, for example, processing performed by a particular processing unit may be performed by a different processing unit. The order of the plurality of processes may be changed, and the plurality of processes may be executed in parallel.

In the above embodiment, each element (each processing unit) may be implemented by executing a software program suitable for the element. Each element may be implemented by a program execution unit such as a central processing unit (CPU) or a processor reading and executing a software program recorded on a recording medium such as a hard disk or semiconductor memory.

Each element may also be implemented by hardware. Each element may be a circuit (or an integrated circuit). These circuits may collectively constitute a single circuit, or may each be separate circuits. These circuits may each be a general-purpose circuit or a dedicated circuit.

General or specific aspects of the present disclosure may be realized as a system, an apparatus or device, a method, an integrated circuit, a computer program, or a computer-readable non-transitory recording medium such as CD-ROM. Any given combination of a system, an apparatus or device, a method, an integrated circuit, a computer program, and a recording medium may be used to realize the aspects.

For example, the present disclosure may be implemented as a measurement method executed by a computer. The present disclosure may be implemented as a program for causing a computer to execute the measurement method, or may be implemented as a computer-readable non-transitory recording medium on which such a program is recorded.

Embodiments arrived at by a person skilled in the art making various modifications to any one of the embodiments, or embodiments realized by arbitrarily combining elements and functions in the embodiments which do not depart from the essence of the present disclosure are also included in the present disclosure.

### [Industrial Applicability]

The present disclosure can be applied to a device that calculates glass-to-glass delay time.

### [Reference Signs List]

- 10: delay measurement system
- 100: control device
- 101: image capturing controller
- 102: display controller
- 103: bandwidth controller
- 104, 112: storage
- 110: measurement device
- 111: measurer
- 120: remote operation device
- 200, 210, 220, 230, 240: display device
- 300: robot
- 400, 410: image capturing device
- 500: base station
- 510, 530: hub
- 520: internet
- 540: router
- 550: distributor
- 600: terminal
- 700, 701, 702, 703, 704, 710, 711, 712, 713, 714: time information

## Claims

1. A measurement method executed by a computer, the measurement method comprising:
a first display process of repeatedly displaying, on a first display device, a first image including a plurality of items of time information each indicating a time, while sequentially updating the plurality of items of time information one by one;
a first image capturing process of generating a second image by causing a first image capturing device to capture the first image displayed on the first display device;
a second display process of displaying the second image on a second display device; and
a measurement process of measuring, based on the first image and the second image, a delay time from when the first image capturing device captures the first image to when the second image is displayed on the second display device.

2. The measurement method according to claim 1, further comprising:
a counting process of calculating a count of a number of times the first image is displayed on the first display device with an updated time indicated by any one of the plurality of items of time information, wherein
the plurality of items of time information include first time information and second time information, and
in the first display process, when the count is an even number, only one of the first time information or the second time information is updated on the first image to be displayed on the first display device, and when the count is an odd number, only an other of the first time information or the second time information is updated on the first image to be displayed on the first display device.

3. The measurement method according to claim 1, further comprising:
a third display process of repeatedly displaying the first image on a third display device while sequentially updating a time indicated by any one of the plurality of items of time information; and
a second image capturing process of generating a third image by causing a second image capturing device to capture the second image displayed on the second display device and the first image displayed on the third display device, wherein
in the measurement process, the delay time is measured based on the third image.

4. The measurement method according to claim 3, wherein
in the measurement process, the delay time is measured based on a difference between a latest time indicated by readable time information among the plurality of items of time information included in the second image displayed on the second display device and a latest time indicated by readable time information among the plurality of items of time information included in the first image displayed on the third display device.

5. The measurement method according to claim 1, wherein
the first image capturing process further includes generating compressed information that is smaller in data amount than the second image and indicates times indicated by each of the plurality of items of time information included in the second image, based on a transmission rate during a period until the second image is transmitted from the first image capturing device to the second display device, and
in the second display process, the second image is reconstructed based on the compressed information and displayed on the second display device.

6. The measurement method according to claim 1, wherein
each of the plurality of items of time information is a QR code (registered trademark) that indicates time.

7. The measurement method according to claim 1, wherein
the first display process includes changing a size, in the first image, of the plurality of items of time information included in the first image to be displayed on the first display device, based on a transmission rate during a period until the second image is transmitted from the first image capturing device to the second display device.

8. A program for causing a computer to execute the measurement method according to any one of claims 1 to 7.

9. A measurement system comprising:
a first display controller that repeatedly displays, on a first display device, a first image including a plurality of items of time information each indicating a time, while sequentially updating the plurality of items of time information one by one;
an image capturing controller that generates a second image by causing a first image capturing device to capture the first image displayed on the first display device;
a second display controller that displays the second image on a second display device; and
a measurer that measures, based on the first image and the second image, a delay time from when the first image capturing device captures the first image to when the second image is displayed on the second display device.
